# EUROPEAN PATENT APPLICATION

(11) **EP 3 524 452 A1**
(43) Date of publication of application: **14.08.2019**
(21) Application number: 17858306.8
(22) Date of filing: 29.09.2017
(51) Int. Cl.: B60H 1/00

(54) **AIR CONDITIONING UNIT FOR VEHICLE**

(30) Priority: 05.10.2016 JP 2016196893
(71) Applicant: Valeo Japan Co., Ltd., Saitama 360-0193 (JP)
(72) Inventor: ARAKI, Daisuke, Kumagaya-shi Saitama 360-0193 (JP)
(74) Representative: Metz, Gaëlle
(86) International application number: PCT/JP2017/035462
(87) International publication number: WO 2018/066468

(57) **Abstract**

[Object]

To provide a vehicle air conditioning unit that suppresses increase in a ventilation resistance when part of warm air flowing through an upper air passage is introduced to a foot blowout port opened to a lower air passage in a bi-level mode and warm air flowing through the upper air passage is introduced to a defrost blowout port opened to the upper air passage in a defrost mode.

[Solution]

A vent open/close door 17 has a ventilation resistance adjusting part 173 separately from a closing part 172, the ventilation resistance adjusting part 173 is disposed in a position in which the ventilation area of an air passage between a space 31a downstream of the heating heat exchanger 6 in the upper air passage 31 and the vent blowout port 11 is smaller in the bi-level mode than in other blowout modes and the ventilation resistance adjusting part 173 is disposed in a position in which the ventilation area of the air passage between the space 31a downstream of the heating heat exchanger 6 in the upper air passage 173 and a defrost blowout port 10 is not smaller in a defrost mode than in other blowout modes.

## Description

### Technical Field

The present invention relates to a vehicle air conditioning unit having an upper air passage and a lower air passage in a casing.

### Background Art

There is a known vehicle air conditioning unit (such as, for example, PTL 1) that has an upper air passage and a lower air passage in a casing, blows air introduced through a first channel to the upper air passage using a blower, blows air introduced through a second channel to the lower air passage using a blower, and can control the temperature of air flowing through the air passages in the upper air passage and the lower air passage.

Generally, vehicle air conditioning devices including that disclosed in PTL 1 have a defrost blowout port through which conditioned air is blown toward the front glass of a vehicle, a vent blowout port through which conditioned air is blown toward the upper bodies of occupants in the front seat, and a foot blowout port through which conditioned air is blown toward the feet of occupants in the front seat. In a bi-level mode, the warm air comfort of occupants needs to be improved by causing a difference between the temperatures of the air blown from the blowout ports so that the temperature of the air blown from the foot blowout port is higher than the temperature of the warm air blown from the vent blowout port.

The vehicle air conditioning unit in PTL 1 has at least a first two-layer partitioning plate for partitioning the downstream side of a heating heat exchanger into an upper air passage and a lower air passage and a passage partitioning plate provided above the first two-layer partitioning plate. A first opening that communicates the upper air passage with the lower air passage is provided between the first two-layer partitioning plate and a casing disposed at the rear thereof. The passage partitioning plate partitions the upper air passage, an upstream side thereof reaches the vicinity of the heating heat exchanger, a downstream side thereof extends obliquely downward until it reaches the track of a foot open/close door, so that the warm air flowing between the first two-layer partitioning plate and the passage partitioning plate can be introduced from the warm air outlet to the first opening. In addition, between the passage partitioning plate and the casing positioned at the rear thereof, a second opening is provided above the warm air outlet positioned at the downstream end of the passage partitioning plate.

In addition, the vehicle air conditioning unit in PTL 1 introduces the warm air having flowed between the first two-layer partitioning plate and the passage partitioning plate from the warm air outlet to the first opening and prevents the warm air from flowing to the second opening since the foot open/close door is positioned between the first opening and the second opening in the bi-level mode. Accordingly, not only warm air flowing through the lower air passage, but also warm air flowing through the upper air passage is introduced to the foot blowout port, thereby causing a difference between the temperatures of the air blown from the vent blowout port and the air blown from the foot blowout port.

### Citation List

### Patent Literature

PTL 1: JP-A-2015-80959

### Summary of Invention

### Technical Problem

Vehicle air conditioning devices such as that disclosed in PTL 1 generally have a vent mode, a foot mode, a defrost foot mode, and a foot mode in addition to the bi-level mode described above as blowout modes for conditioned air. The defrost mode is a blowout mode for removing fogging or freezing of the front glass of a vehicle and needs to blow out warm air sharply (at high speed of warm air and/or with a large amount of warm air).

However, since the passage partitioning plate extends so as to reach the track of the foot open/close door in the vehicle air conditioning unit in PTL 1, the warm air having flowed between the first two-layer partitioning plate and the passage partitioning plate cannot reach the blowout ports without passing in the vicinity of the track of the foot open/close door.

Accordingly, in the vehicle air conditioning unit in PTL 1, the ventilation resistance of the warm air having flowed between the first two-layer partitioning plate and the passage partitioning plate and is directed to the blowout ports increases, thereby causing inconvenience of making it difficult to sharply blow the warm air from the defrost blowout port particularly in the defrost mode.

Therefore, an object of the invention is to provide a vehicle air conditioning unit that introduces the warm air flowing through the upper air passage to the foot blowout port in the bi-level mode and suppresses increase in the ventilation resistance of the warm air flowing through the upper air passage in the defrost mode.

### Solution to Problem

A vehicle air conditioning unit according to the invention includes a casing having an air passage therein; a defrost blowout port, a vent blowout port, and a foot blowout port formed in the casing; a defrost open/close door that opens and closes the defrost blowout port using a closing part, a vent open/close door that opens and closes the vent blowout port using a closing part, and a foot open/close door that opens and closes the foot blowout port using a closing part; an upper air passage and a lower air passage formed one above another by partitioning the air passage using a partitioning part; a cooling heat exchanger disposed in the upper air passage and the lower air passage; and a heating heat exchanger disposed downstream of the cooling heat exchanger in the upper air passage and the lower air passage, the defrost blowout port and the vent blowout port being opened above the partitioning part, the foot blowout port being opened below the defrost blowout port and the vent blowout port, in which the vent open/close door has a ventilation resistance adjusting part that forms a resistance against a flow of air separately from the closing part, and the ventilation resistance adjusting part is disposed in a position in which a ventilation area of an air passage between a space downstream of the heating heat exchanger in the upper air passage and the vent blowout port is smaller in a bi-level mode than in other blowout modes, and the ventilation resistance adjusting part is disposed in a position in which a ventilation area of an air passage between the space downstream of the heating heat exchanger in the upper air passage and the defrost blowout port is not smaller in a defrost mode than in other blowout modes.

Accordingly, in the bi-level mode, by positioning the ventilation resistance adjusting part so as to make the ventilation area of the air passage between the space downstream of the heating heat exchanger in the upper air passage and the vent blowout port smaller than in the other blowout modes, it is possible to form a resistance against a flow of warm air that is heated by the heating heat exchanger in the upper air passage and directed to the vent blowout port, a flow of warm air directed to a lower part is easily generated. Then, by blowing the warm air directed to the lower part of the warm air to the foot blowout port, the amount of warm air toward the vent blowout port can be reduced and the amount of warm air toward the foot blowout port can be increased. Therefore, a difference between the temperatures of the air blown from the vent blowout port and the air blown from the foot blowout port can be ensured in the bi-level mode.

In contrast, in the defrost mode, by positioning the ventilation resistance adjusting part so that the ventilation area of the air passage between the space downstream of the heating heat exchanger in the upper air passage and the defrost blowout port is not smaller than in the other blowout modes, it is possible to prevent the ventilation resistance adjusting part from forming a resistance against a flow of warm air in the upper air passage. That is, the flow direction of the warm air having flowed from the heating heat exchanger in the upper air passage can be changed to the defrost blowout port immediately after flowing from the heating heat exchanger without flowing to the vicinity of the foot blowout port after flowing from the heating heat exchanger. Therefore, in the defrost mode, the sufficient amount and speed of warm air to be blown to the defrost blowout port can be obtained.

In the invention recited in claim 2, the ventilation resistance adjusting part is positioned in a direction substantially orthogonally to a draft direction of the heating heat exchanger in the defrost mode.

Accordingly, since the ventilation resistance adjusting part is positioned in a direction substantially orthogonal to the heating heat exchanger in the defrost mode and the ventilation resistance adjusting part is present outside a flow of warm air toward the defrost blowout port, the ventilation resistance adjusting part cannot become a ventilation resistance body.

In the invention recited in claim 3, the ventilation resistance adjusting part is positioned along a flow of air from the space downstream of the heating heat exchanger in the upper air passage toward the defrost blowout port in the defrost mode.

Accordingly, since the ventilation resistance adjusting part is positioned along a flow of air from the space downstream of the heating heat exchanger to the defrost blowout port in the defrost mode, the ventilation resistance adjusting part can be prevented from becoming a ventilation resistive element against a flow of warm air toward the defrost blowout port.

In the invention recited in claim 4, the ventilation resistance adjusting part is disposed in a position in which the ventilation resistance adjusting part makes the ventilation area of the air passage between the space downstream of the heating heat exchanger in the upper air passage and the vent blowout port smaller in the bi-level mode than in other blowout modes by making contact with the heating heat exchanger.

Accordingly, the ventilation resistance adjusting part makes the ventilation area of the air passage between the space downstream of the heating heat exchanger in the upper air passage and the vent blowout port smaller than in the other blowout modes while making contact with the heating heat exchanger in the bi-level mode, it is possible to effectively suppress a short circuit between the warm air heated by heating heat exchanger in the upper air passage and the vent blowout port and ensure a difference between the temperatures of the air blown from the vent blowout port and the air blown from the foot blowout port.

In the invention recited in claim 5, the upper air passage is provided with a guide part that forms a resistance against a flow of air downstream of the heating heat exchanger in the upper air flow path, the guide part extends from the defrost blowout port toward the foot blowout port, an upper end part of the guide part positioned close to the defrost blowout port is disposed apart from the heating heat exchange and a first draft part is formed between the upper end part and the heating heat exchanger, the first draft part is closed by the ventilation resistance adjusting part or a ventilation area of the first draft part is smaller in the bi-level mode than in other blowout modes, and a lower end part of the guide part positioned close to the foot blowout port is disposed outside a track of the foot open/close door and a second draft part is formed between the lower end part and the casing.

Accordingly, since the guide part is positioned on an extended line from the ventilation resistance adjusting part toward the downstream side of the heating heat exchanger and a flow that circles around the lower end part of the guide part from the ventilation resistance adjusting part can be generated with respect to warm air heated by the heating heat exchanger in the upper air passage in the bi-level mode, a resistance against a flow of the warm air toward the vent blowout port can be made larger. Therefore, the amount of the warm air directed to the vent blowout port is made smaller and the amount of the warm air directed downward is also increased. Therefore, it is possible to ensure a difference between the temperatures of the air blown from the vent blowout port and the air blown from the foot blowout port more surely in the bi-level mode.

Since the upper end part of the guide part is disposed apart from the heating heat exchanger in the defrost mode and the first draft part is formed by the upper end part and the heating heat exchanger, at least part of the warm air having flowed from the heating heat exchanger in the upper air passage does not flow to the vicinity of the foot blowout port even when the guide part is formed, and the flow direction thereof can be immediately changed to the defrost blowout port after the warm air flows from the heating heat exchanger. In addition, since the lower end part of the guide part is present outside the track of the foot open/close door, the warm air that has not passed through the first draft part of the warm air having flowed from the heating heat exchanger in the upper air passage can also change its flow direction to the defrost blowout port on the upstream side before flowing to the vicinity of the foot blowout port. Therefore, even when the guide part is formed, the sufficient amount and speed of warm air to be blown to the defrost blowout port can be obtained in the defrost mode.

In the invention recited in claim 6, a first air mix door that is disposed between the cooling heat exchanger and the heating heat exchanger in the upper air passage and adjusts a ratio of air passing through the heating heat exchanger to air having passed through the cooling heat exchanger and a ratio of air passing through a bypass path positioned above the heating heat exchanger to the air having passed through the cooling heat exchanger; a second air mix door that is disposed between the cooling heat exchanger and the heating heat exchanger in the lower air passage and adjusts a ratio of air passing through the heating heat exchanger to the air having passed through the cooling heat exchanger and a ratio of air passing through a bypass path positioned below the heating heat exchanger to the air having passed through the cooling heat exchanger; and a communicating path through which the upper air passage communicates with the lower air passage downstream of the heating heat exchanger are further included, in which an opening degree of the communicating path is adjusted by the foot open/close door.

Accordingly, in the bi-level mode, when the foot open/close door opens the foot blowout port, the opening degree of the communicating path by the foot open/close door is set to a value more than 0%, so that part of the warm air heated in the upper air passage by the heating heat exchanger can be directed from the communicating path to the foot blowout port through the lower air passage.

In addition, in the vent mode and the defrost mode, by setting the opening degree of the communicating path by the foot open/close door to a value more than 0% when the foot open/close door closes the foot blowout port, all of the air having flowed through the lower air passage can be directed from the communicating path to the defrost blowout port or the vent blowout port through the upper air passage.

In the invention recited in claim 7, the vent open/close door has a rotational shaft about which the closing part and the ventilation resistance adjusting part pivot and a space part through which air is passable is formed between the ventilation resistance adjusting part and the rotational shaft.

Accordingly, since the cool air having bypassed the heating heat exchanger passes through the space part of the vent open/close door and is smoothly blown to vent blowout port in the bi-level mode, it is possible to ensure the amount of cool air to be blown to the vent blowout port and a difference between the temperatures of the warm air blown from the vent blowout port and the warm air blown from the foot blowout port.

### Advantageous Effects of Invention

According to the invention, it is possible to reduce the amount of warm air toward the vent blowout port, increase the amount of warm air toward the foot blowout port, and ensure a difference between the temperatures of the air blown from the vent blowout port and the air blown from the foot blowout port. In the defrost mode, it is possible to obtain the sufficient amount and speed of warm air to be blown to the defrost blowout port by suppressing increase in a ventilation resistance against a flow of warm air in the upper air passage.

### Brief Description of Drawings

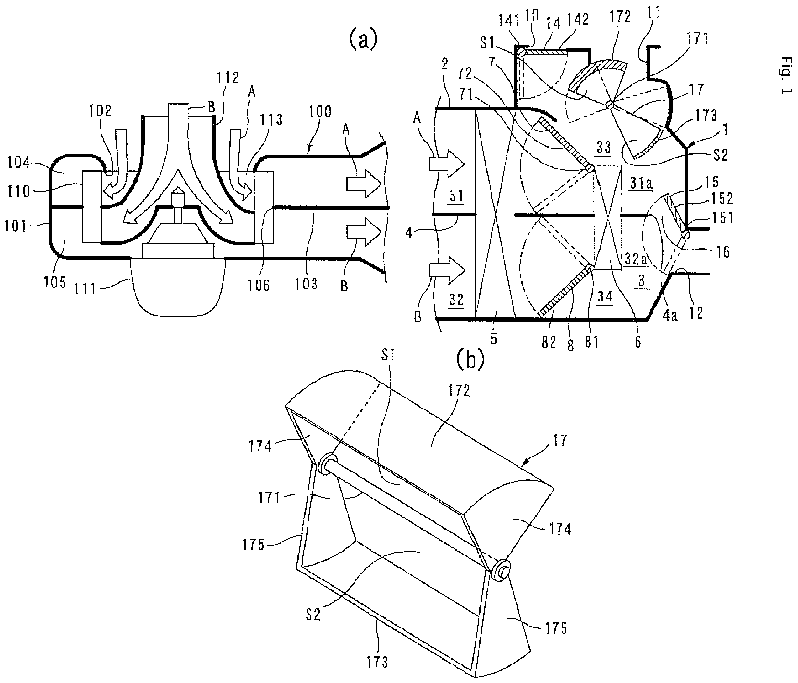

Fig. 1(a) is a cross sectional view schematically illustrating a vehicle air conditioning unit and a blower unit according to a first embodiment of the invention and Fig. 1(b) is a perspective view illustrating the structure of a vent open/close door used in the vehicle air conditioning unit according to the first embodiment.

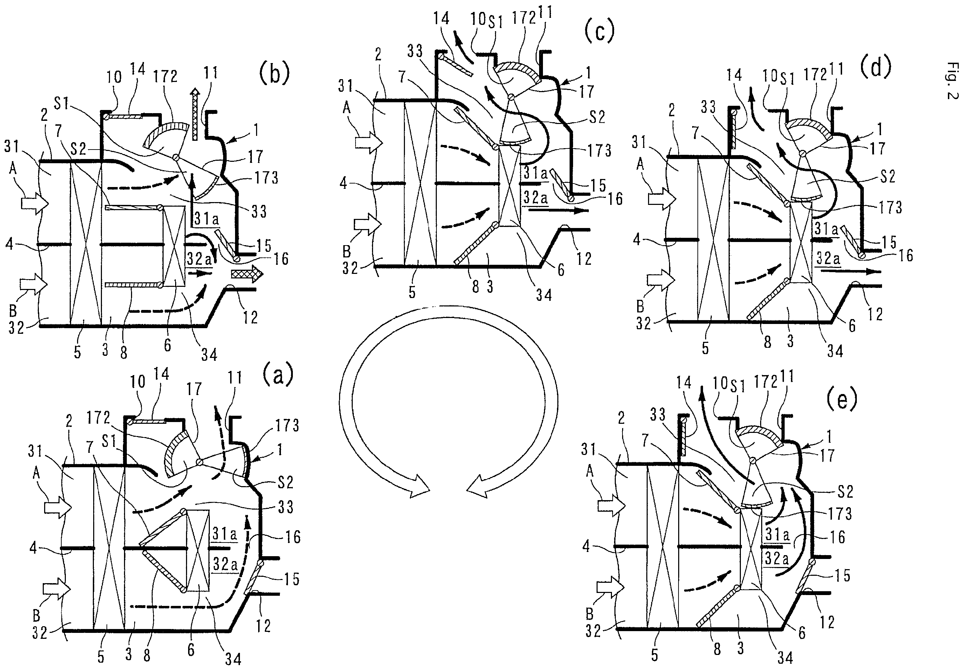

Fig. 2 is a schematic view illustrating modes of the vehicle air conditioning unit according to the first embodiment of the invention, Fig. 2 (a) illustrates a vent mode, Fig. 2(b) illustrates a bi-level mode, Fig. 2(c) illustrates a foot mode, Fig. 2(d) illustrates a defrost foot mode, and Fig. 2(e) illustrates a defrost mode.

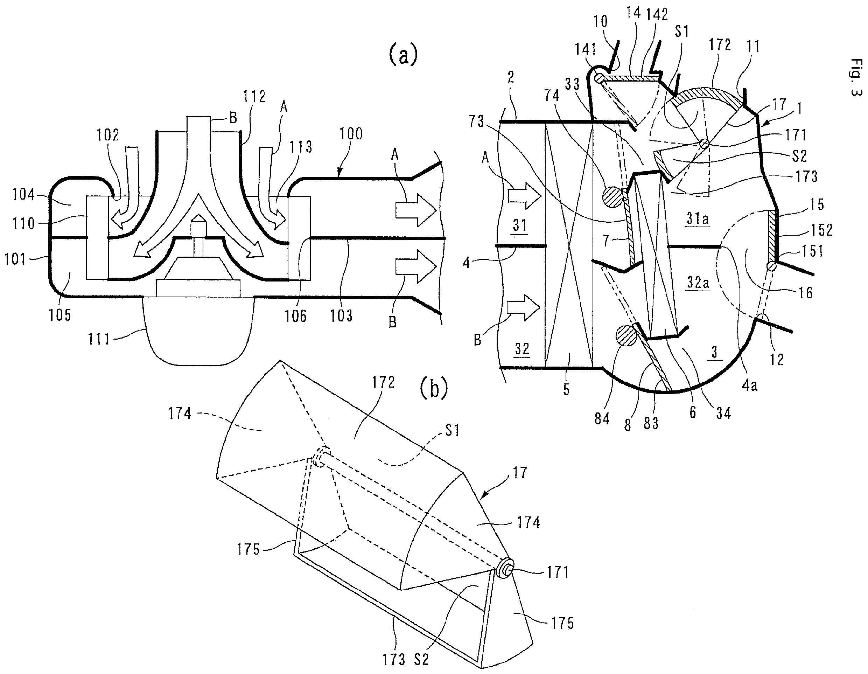

Fig. 3(a) is a cross sectional view schematically illustrating a vehicle air conditioning unit and a blower unit according to a second embodiment of the invention and Fig. 3(b) is a perspective view illustrating the structure of a vent open/close door used in the vehicle air conditioning unit according to the second embodiment.

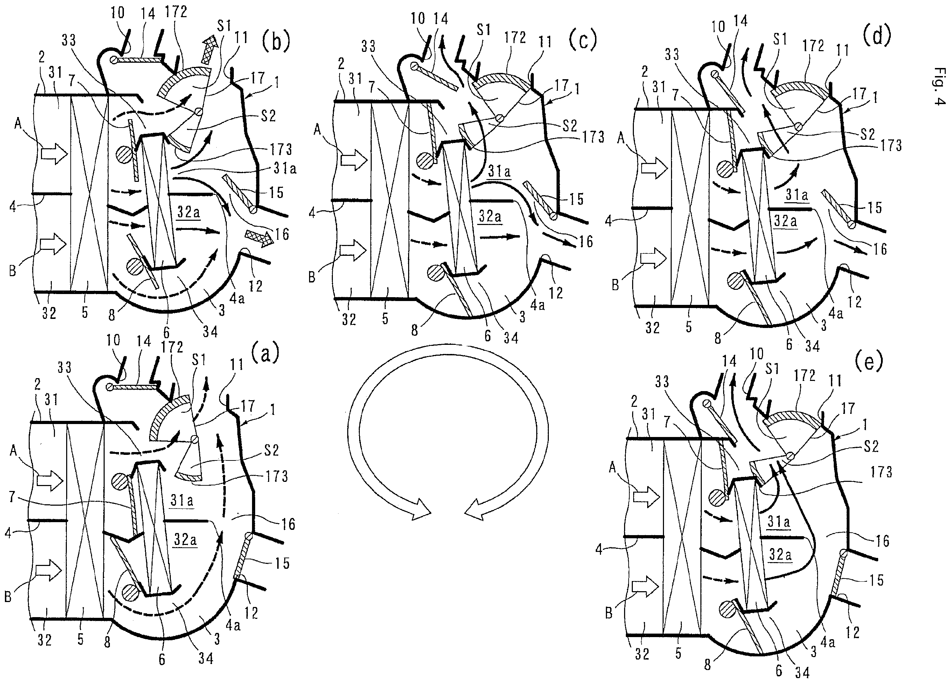

Fig. 4 is a schematic view illustrating modes of the vehicle air conditioning unit according to the second embodiment of the invention, Fig. 4 (a) illustrates a vent mode, Fig. 4(b) illustrates a bi-level mode, Fig. 4(c) illustrates a foot mode, Fig. 4(d) illustrates a defrost foot mode, and Fig. 4(e) illustrates a defrost mode.

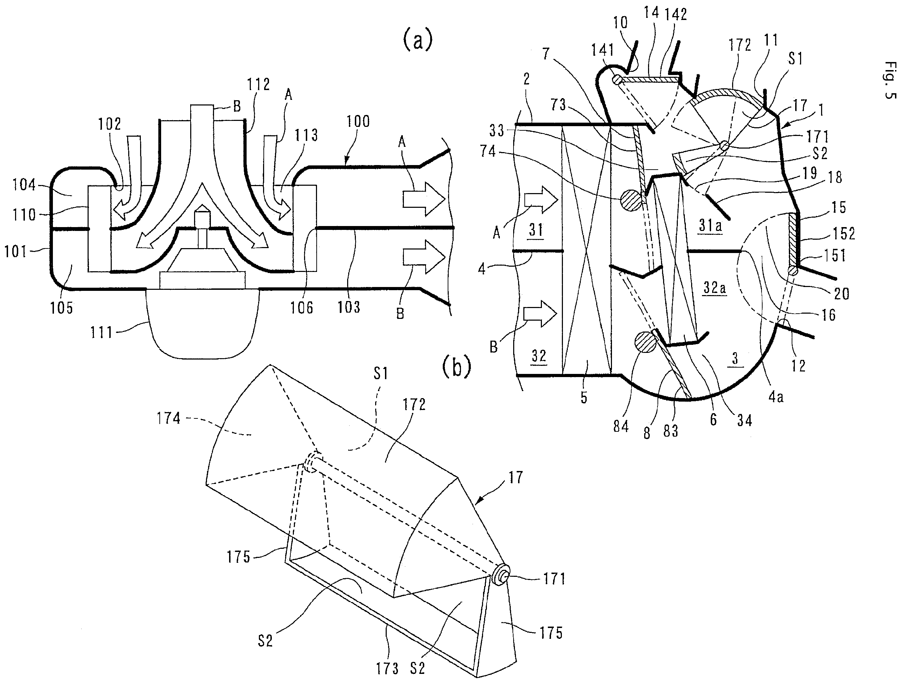

Fig. 5(a) is a cross sectional view schematically illustrating a vehicle air conditioning unit and a blower unit according to a third embodiment of the invention and Fig. 5(b) is a perspective view illustrating the structure of a vent open/close door used in the vehicle air conditioning unit according to the third embodiment.

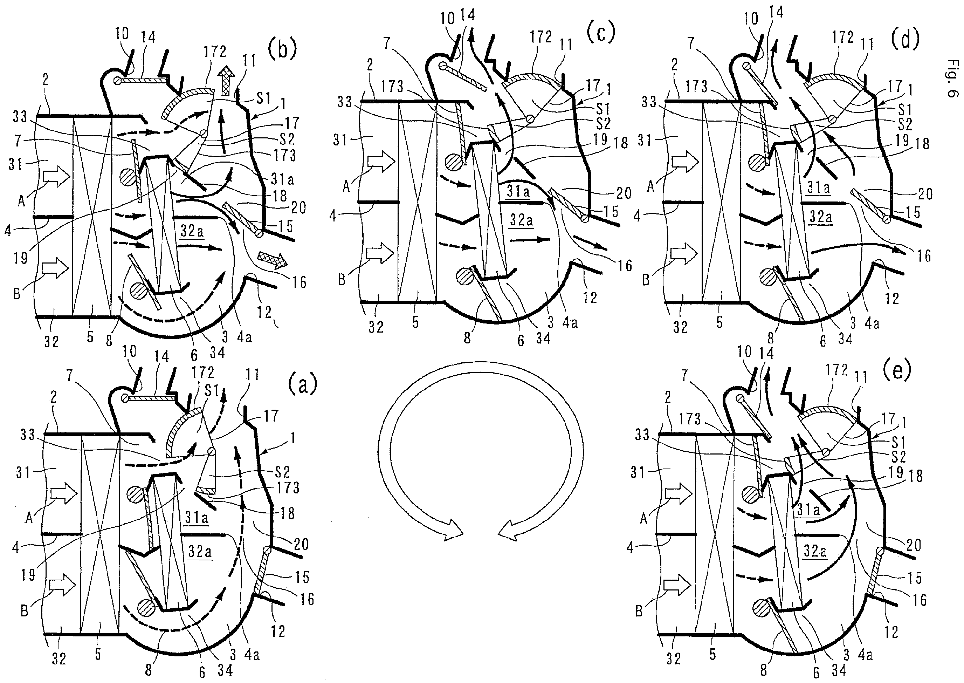

Fig. 6 is a schematic view illustrating modes of the vehicle air conditioning unit according to the third embodiment of the invention, Fig. 6 (a) illustrates a vent mode, Fig. 6(b) illustrates a bi-level mode, Fig. 6(c) illustrates a foot mode, Fig. 6(d) illustrates a defrost foot mode, and Fig. 6(e) illustrates a defrost mode.

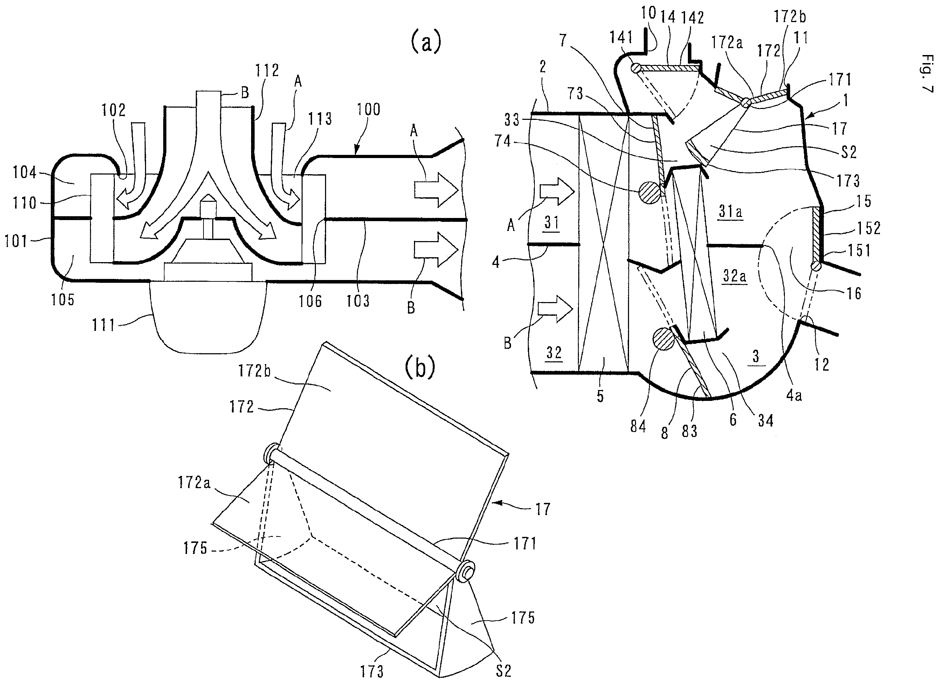

Fig. 7 (a) is a cross sectional view illustrating a vehicle air conditioning unit and a blower unit according to a fourth embodiment of the invention and Fig. 7(b) is a perspective view illustrating the structure of a vent open/close door used in the vehicle air conditioning unit according to the fourth embodiment.

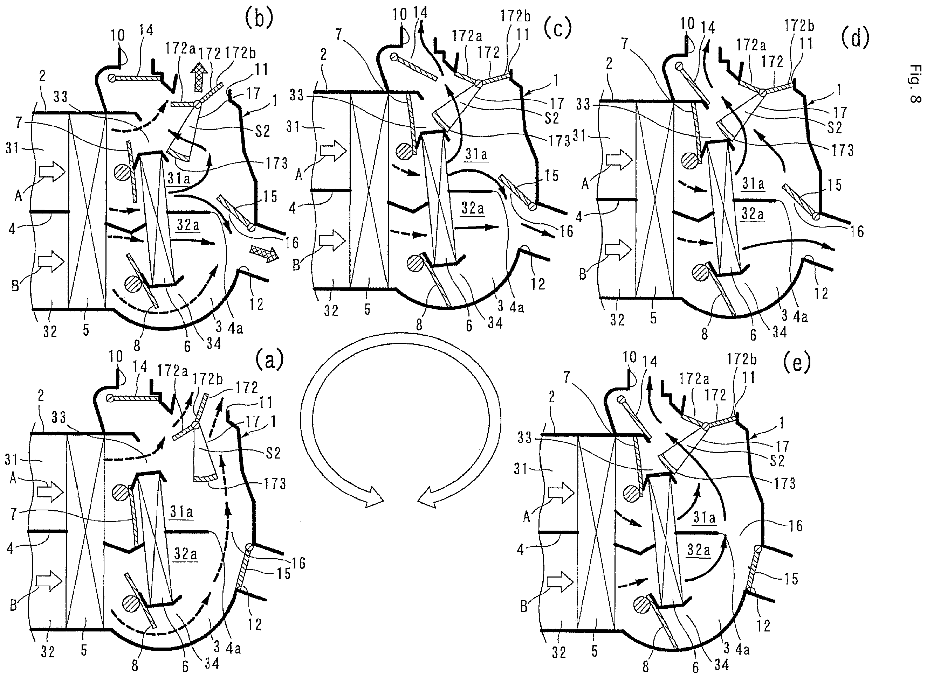

Fig. 8 is a schematic view illustrating modes of the vehicle air conditioning unit according to the fourth embodiment of the invention, Fig. 8 (a) illustrates a vent mode, Fig. 8(b) illustrates a bi-level mode, Fig. 8(c) illustrates a foot mode, Fig. 8(d) illustrates a defrost foot mode, and Fig. 8(e) illustrates a defrost mode.

### Description of Embodiments

Embodiments of the invention will be described below with reference to the drawings. Embodiment 1 is illustrated in Fig. 1 and Fig. 2, embodiment 2 is illustrated in Fig. 3 and Fig. 4, embodiment 3 is illustrated in Fig. 5 and Fig. 6, and embodiment 4 is illustrated in Fig. 7 and Fig. 8.

### Embodiment 1

Fig. 1(a) illustrates schematic structures of an air conditioning unit 1 of a vehicle air conditioning device according to embodiment 1 of the invention and an example of a blowing unit 100 that blows air to an air passage 3 of the air conditioning unit 1. The air conditioning unit 1 may be integrated with the blowing unit 100 or may be connected to the blowing unit 100 as a separate body via a duct or the like. The blowing unit 100 is disposed in one of directions substantially horizontal to the air conditioning unit 1.

The blowing unit 100 can blow air to an upper air passage 31 and a lower air passage 32, which will be described below, of the air conditioning unit 1 through different channels. That is, the blowing unit 100 can introduce, for example, outside air to the upper air passage 31 and inside air to the lower air passage 32. The blowing unit 100 basically includes a casing 101, a fan 110 housed in the casing 101, and a motor 111 that drives the fan 110. The fan 110 is, for example, a centrifugal multi-blade fan (sirocco fan).

The casing 101 has a bell-mouth 102 that is opened upward and an upper air passage 104 and a lower air passage 105 that are formed by partitioning a space in the casing 101 using a partitioning part 103. The partitioning part 103 has an opening 106 in which the fan 110 is installed.

The blower 100 has a separation cylinder 112 having an inner suction port opened upward and inner blowout ports opened downward. The inner suction port of the separation cylinder 112 is opened above the bell-mouth 102 and extends further inward of the casing 101 than the bell-mouth 102 and the inner blowout ports are opened in positions, inside the blades of the centrifugal multi-blade fan 110, that are substantially horizontal to the partitioning part 103. As a result, the separation cylinder 112 separates the bell-mouth 102 into the inside and the outside and an outer suction port 113 is defined between the bell-mouth 102 and the separation cylinder 112. The inner suction port of the separation cylinder 112 communicates with at least an inside air introduction port (not illustrated). The inner blowout ports communicate with the lower air passage 105. The outer suction port 113 communicates with at least an outside air introduction port (not illustrated) and also communicates with the upper air passage 104.

Accordingly, the air introduced from the inner suction port to the separation cylinder 112 by the rotation of the fan 110 of the blower 100 is blown from the inner blowout port to the lower air passage 105 as illustrated by arrow B in Fig. 1(a). Furthermore, as illustrated by arrow B in Fig. 1 (a) and Fig. 2, the air is blown to the lower air passage 32 of the air conditioning unit 1. In addition, the air introduced from the outer suction port 113 to the casing 101 by the rotation of the fan 110 of the blower 100 is blown to the upper air passage 104 as illustrated by arrow A in Fig. 1(a). Furthermore, as illustrated by arrow A in Fig. 1(a) and Fig. 2, the air is blown to the upper air passage 31 of the air conditioning unit 1.

The air conditioning unit 1 illustrated in Fig. 1(a) and Fig. 2 is disposed on a vehicle interior side than a dividing wall (not illustrated) that separates an engine room or a motor room from the vehicle interior.

The air conditioning unit 1 is provided with a casing 2 having the air passage 3 therein. The air passage 3 is partitioned by a partitioning part 4 into the upper air passage 31 positioned in an upper part of the vehicle and the lower air passage 32 positioned in a lower part of the vehicle. The upper air passage 31 communicates with the upper air passage 104 of the blowing unit 100 and the lower air passage 32 communicates with the lower air passage 105 of the blowing unit 100.

A cooling heat exchanger 5 and a heating heat exchanger 6 are disposed in the upper air passage 31 and the lower air passage 32.

The cooling heat exchanger 5 is an evaporator or the like that cools air blown from the blowing unit 100. The cooling heat exchanger 5 is formed by alternately laminating, for example, a plurality of stages of corrugated fins and tubes and providing a tank at ends in the longitudinal direction of the tubes . The cooling heat exchanger 5 is connected to another air conditioning device (not illustrated) as appropriate via pipes and forms a refrigeration cycle. In embodiment 1, the cooling heat exchanger 5 is disposed across the upper air passage 31 and the lower air passage 32, all of the air having passed through the upper air passage 31 passes through the cooling heat exchanger 5, and all of the air having passed through the lower air passage 32 passes through the cooling heat exchanger 5. However, the cooling heat exchanger may be disposed in each in the upper air passage 31 and the lower air passage 32.

The heating heat exchanger 6 is a hot water type heater core or electric heater that heats air cooled by the cooling heat exchanger 5. In embodiment 1, the heating heat exchanger 6 is disposed so as to straddle the partitioning part 4 and project to air flow paths in the upper air passage 31 and the lower air passage 32. However, the heating heat exchangers 6 may also be disposed in each of the upper air passage 31 and the lower air passage 32. The upper air passage 31 has, above the heating heat exchanger 6, a bypass path 33 through which the air having passed through the cooling heat exchanger 5 can bypass the heating heat exchanger 6. In addition, the lower air passage 32 has, below the heating heat exchanger 6, a bypass path 34 through which the air having passed through the cooling heat exchanger 5 can bypass the heating heat exchanger 6.

In the upper air passage 31, an air mix door 7 is disposed downstream of the cooling heat exchanger 5 and upstream of the heating heat exchanger 6 and the bypass path 33. In addition, in the lower air passage 32, an air mix door 8 is disposed downstream of the cooling heat exchanger 5 and upstream of the heating heat exchanger 6 and the bypass path 34. The air mix door 7 is equivalent to the first air mix door in claims and the air mix door 8 is equivalent to the second air mix door in claims.

A space 31a to which the warm air having passed through the heating heat exchanger 6 is drawn is provided downstream of the heating heat exchanger 6 in an upper air passage 31. A space 32a to which warm air having passed through the heating heat exchanger 6 is drawn is provided downstream of the heating heat exchanger 6 in the lower air passage 32.

The air mix doors 7 and 8 adjust the ratios of the air passing through the heating heat exchanger 6 and the bypass path 33 to the air having passed through the cooling heat exchanger 5 and the ratios of the air passing through the heating heat exchanger 6 and the bypass path 34 to the air having passed through the cooling heat exchanger 5. In embodiment 1, the air mix doors 7 and 8 are flag type doors including rotational shafts 71 and 81 and one planar closing part 72 or 82 extending from the rotational shafts 71 and 81. In addition, in embodiment 1, the air mix doors 7 and 8 are driven by a common driving mechanism (not illustrated) to reduce the number of components.

A defrost blowout port 10, a vent blowout port 11, and a foot blowout port 12 are formed most downstream of the air passage 3 of the casing 2. The defrost blowout port 10 and the vent blowout port 11 are opened above the partitioning part 4 (that is, close to the upper air passage 31). The foot blowout port 12 is opened below the defrost blowout port 10 and the vent blowout port 11 and opened close to the lower air passage 32 in embodiment 1.

In addition, a defrost open/close door 14 is disposed in the vicinity of the defrost blowout port 10. In embodiment 1, the defrost open/close door 14 is a flag type door including a rotational shaft 141 and one planar closing part 142 extending from the rotational shaft 141 and adjusts the opening degree of the defrost blowout port 10 using the closing part 142. The defrost open/close door 14 can put the defrost blowout port 10 in a closed state, a half-open state between 0% and 100% exclusive, or a 100% open state.

A foot open/close door 15 is disposed in the vicinity of the foot blowout port 12. In embodiment 1, the foot open/close door 15 is a flag type door including a rotational shaft 151 and one planar closing part 152 extending from the rotational shaft 151 and adjusts the opening degree of the foot blowout port 12 using the closing part 152. The foot open/close door 15 can put the foot blowout port 12 in a closed state, a half-open state between 0% and 100% exclusive, or a 100% open state.

In the partitioning part 4, an end part 4a downstream thereof extends in the vicinity of the track of the foot open/close door 15. In addition, a communicating path 16 that communicates the upper air passage 31 with the lower air passage 32 is formed between the end part 4a downstream thereof and the casing 2. The space 31a (space to which the warm air having passed through the heating heat exchanger 6 projecting to the upper air passage 31 is blown) is formed above the communicating path 16 and the space 31a continues to the defrost blowout port 10 and the vent blowout port 11. The space 32a (space to which the warm air having passed through the heating heat exchanger 6 projecting to the lower air passage 32 is blown) is formed below the communicating path 16 and the space 32a continues to the foot blowout port 12.

The foot open/close door 15 adjusts the opening degree of the communicating path 16 in addition to the foot blowout port 12 using the closing part 152. The foot open/close door 15 can put the foot blowout port 12 and the communicating path 16 in a state in which the foot blowout port 12 is closed and the communicating path 16 is opened, a state in which the foot blowout port 12 is opened and the communicating path 16 is closed, or both the foot blowout port 12 and the communicating path 16 are opened.

A vent open/close door 17 is a rotary door having a rotational shaft 171, a closing part 172 that adjusts the opening degree of the vent blowout port 11, and a ventilation resistance adjusting part 173 as illustrated in Fig. 1(a) and Fig. 1(b).

The closing part 172 extends along an arc of a circle around the rotational shaft 171 as the center and, as illustrated in Fig. 1(b), planar supporting parts 174 and 174 are disposed apart from each other between the closing part 172 and the rotational shaft 171. Accordingly, the vent open/close door 17 has a space part S1 surrounded by the rotational shaft 171, the supporting parts 174 and 174, and the closing part 172. The closing part 172 of the vent open/close door 17 can put the vent blowout port 11 in a closed state, a half-open state between 0% and 100% exclusive, or a 100% open state.

The ventilation resistance adjusting part 173 extends along an arc of a circle around the rotational shaft 171 as the center. The radius from the rotational shaft 171 to the outer peripheral surface of the ventilation resistance adjusting part 173 may be the same as or different from the radius from the rotational shaft 171 to the closing part 172. In addition, planar supporting parts 175 and 175 are disposed apart from each other between the ventilation resistance adjusting part 173 and the rotational shaft 171. Accordingly, the vent open/close door 17 has a space part S2 surrounded by the rotational shaft 171, the supporting parts 175 and 175, and the ventilation resistance adjusting part 173.

It should be noted here that, in embodiment 1, the ventilation resistance adjusting part 173 is pivotable so that a lower portion (lower right of the vent blowout port 11 in Fig. 1 (a)) of the vent blowout port 11 of the casing 2 is inflated outward (right side in Fig. 1(a)) along the track of the ventilation resistance adjusting part 173 and the space part S2 can be positioned between the space 31a and the vent blowout port 11.

The disposition of the ventilation resistance adjusting part 173 with respect to the closing part 172 depends on the layout of the defrost blowout port 10, the vent blowout port 11, the foot blowout port 12, and the communicating path 16 and a certain positional relationship is not present, but the following conditions are met in embodiment 1.

When the closing part 172 closes the vent blowout port 11, the ventilation resistance adjusting part 173 positions in a direction substantially orthogonal to the draft direction of the heating heat exchanger 6 and the space parts S1 and S2 of the vent open/close door 17 ensures the ventilation area of the air passage between the space 31a and the defrost blowout port 10.

When the closing part 172 has opened the vent blowout port 11 at 100%, the ventilation resistance adjusting part 173 positions in a part inflated outward in a lower portion of the vent blowout port 11 and the space parts S1 and S2 of the vent open/close door 17 ensure the ventilation area of the air passage between the space 31a and the vent blowout port 11. At the same time, the space parts S1 and S2 ensure the ventilation area of the air passage between the bypass path 33 and the vent blowout port 11.

When the closing part 172 half-opens the vent blowout port 11, the ventilation resistance adjusting part 173 positions in the air passage between the space 31a and the vent blowout port 11 and reduces the ventilation area of the air passage. Specifically, the ventilation resistance adjusting part 173 is disposed so that the ventilation resistance adjusting part 173 does not make contact with the heating heat exchanger 6 and forms a clearance through which the warm air having blown to the space 31a can pass toward the vent blowout port 11.

Next, flows of air in a vent mode, a bi-level mode, a foot mode, a defrost foot mode, and a defrost mode will be described with reference to Fig. 2.

In the vent mode in Fig. 2(a), the opening degrees of the air mix doors 7 and 8 are set so that all of the air having passed through the cooling heat exchanger 5 passes through the bypass path 33 or the bypass path 34. The opening degree of the defrost open/close door 14 is set so as to close the defrost blowout port 10. The opening degree of the foot open/close door 15 is set so as to close the foot blowout port 12 and open the communicating path 16. The opening degree of the vent open/close door 17 is set so as to put the vent blowout port 11 in a 100% open state (including a substantially 100% open state). Specifically, the closing part 172 of the vent open/close door 17 is positioned between the bypass path 33 and the defrost blowout port 10 and the ventilation resistance adjusting part 173 is positioned in a part inflated outward in a lower portion of the vent blowout port 11.

Accordingly, in the upper air passage 31, all of the cool air having been cooled by the cooling heat exchanger 5 passes through the bypass path 33 and the space parts S1 and S2 and is blown to the vent blowout port 11. In addition, in the lower air passage 32, all of the cool air having been cooled by the cooling heat exchanger 5 passes through the bypass path 34, the communicating path 16, and the space parts S1 and S2 and is blown to the vent blowout port 11.

Accordingly, the ventilation resistance adjusting part 173 is positioned outside a flow of cool air, so the ventilation resistance adjusting part 173 does not become a ventilation resistive element against a flow of cool air from the cooling heat exchanger 5 to the vent blowout port 11 through the bypass path 33.

In the bi-level mode in Fig. 2(b), the opening degrees of the air mix doors 7 and 8 are set so that the ratio of the air passing through the heating heat exchanger 6 to the air having passed through the cooling heat exchanger 5 and the ratio of the air passing through the bypass path 33 or the bypass path 34 to the air having passed through the cooling heat exchanger 5 are values between 0% and 100% exclusive and the sum of the ratios equals 100%, for example, the ratio of the air passing through the heating heat exchanger 6 to the air having passed through the cooling heat exchanger 5 is, for example, 50% and the ratio of the air passing through the bypass path 33 or the bypass path 34 to the air having passed through the cooling heat exchanger 5 is, for example, 50%. The ratio (ratio at which cool air is introduced to the bypass path 33) of the opening degree of the air mix door 7 and the ratio (ratio at which cool air is introduced to the bypass path 34) of the opening degree of the air mix door 8 are the same. The opening degree of the defrost open/close door 14 is set so as to close the defrost blowout port 10. The opening degree of the foot open/close door 15 is set so as to position the extension direction of a closing part 162 on the upper air passage 31 side of the partitioning part 4, open the foot blowout port 12, and open the communicating path 16. The open degree of the vent open/close door 17 is set so as to put the vent blowout port 11 in a half-open (between 0% and 100% exclusive) state. Specifically, the closing part 172 is displaced closer to the defrost blowout port 10 than in the case in which the vent blowout port 11 is closed and the ventilation resistance adjusting part 173 is positioned so that the ventilation resistance adjusting part 173 does not make contact with the heating heat exchanger 6 and forms a clearance through which the warm air having blown to the space 31a can pass toward the vent blowout port 11. That is, the ventilation resistance adjusting part 173 is disposed so as to reduce the ventilation area between the space 31a downstream of the heating heat exchanger 6 and the vent blowout port 11.

Accordingly, in the upper air passage 31, the cool air having passed through the cooling heat exchanger 5 becomes the cool air having passed through the bypass path 33 or the warm air having passed through the heating heat exchanger 6 and is blown to the space 31a. In the lower air passage 32, the cool air having passed through the cooling heat exchanger 5 becomes the cool air having passed through the bypass path 34 or the warm air having passed through the heating heat exchanger 6 and is blown to the space 32a.

In the upper air passage 31, all of the cool air having been cooled by the cooling heat exchanger 5 and passed through the bypass path 33 passes through the space parts S1 and S2 and is blown to the vent blowout port 11. The warm air having been heated by the heating heat exchanger 6 and blown to the space 31a tries to flow toward the vent blowout port 11, but the ventilation resistance adjusting part 173 becomes a ventilation resistive element. Therefore, part of the warm air passes through the space part S2, which is the clearance between the heating heat exchanger 6 and the ventilation resistance adjusting part 173, and is blown to the vent blowout port 11. The remaining warm air passes through the communicating path 16 and is blown to the foot blowout port 12.

In the lower air passage 32, all of the cool air having been cooled by the cooling heat exchanger 5 and passed through the bypass path 34 is blown to the foot blowout port 12. The warm air having been heated by the heating heat exchanger 6 and blown to the space 32a is also blown to the foot blowout port 12.

As a result, the air blown from the vent blowout port 11 is a mixture of all of the cool air having passed through the bypass path 33 and part of the warm air having been heated by the heating heat exchanger 6 and blown to the space 31a. The air blown from the foot blowout port 12 is a mixture of all of the cool air having passed through the bypass path 34, all of the warm air having been heated by the heating heat exchanger 6 and blown to the space 32a, and part of the warm air having been heated by the heating heat exchanger 6 and blown to the space 31a. Since part of the warm air having passed through the upper air passage 31 is blown from the foot blowout port 12 instead of the vent blowout port 11 as described above, by making the temperature of the air blown from the foot blowout port 12 relatively higher than the temperature of the air blown from the vent blowout port 11, a difference between the temperatures can be caused.

In the foot mode in Fig. 2(c), the opening degrees of the air mix doors 7 and 8 are set so that the ratio of the air passing through the heating heat exchanger 6 to the air having passed through the cooling heat exchanger 5 is 100%. The opening degree of the defrost open/close door 14 is set to put the defrost blowout port 10 in a half-open state between 0% and 100% exclusive (for example, 50%). The opening degree of the foot open/close door 15 is set so as to position the closing part 162 close to the upper air passage 31 above the end part 4a downstream of the partitioning part 4, open the foot blowout port 12, and half-open the communicating path 16. The open degree of the vent open/close door 17 is set so as to close the vent blowout port 11. Specifically, the vent blowout port 11 is closed by the closing part 172 of the vent open/close door 17 and the ventilation resistance adjusting part 173 is positioned in a direction substantially orthogonal to the draft direction of the heating heat exchanger 6.

Since the ventilation resistance adjusting part 173 is positioned in the direction substantially orthogonal to the draft direction of the heating heat exchanger 6, the ventilation resistance adjusting part 173 does not become a ventilation resistance body against warm air that is blown to the space 31a and directed to the defrost blowout port 10. The space parts S1 and S2 ensure an air passage between the space 31a and the defrost blowout port 10 and does not reduce the ventilation area.

Accordingly, in the upper air passage 31, all of the cool air having been cooled by the cooling heat exchanger 5 is heated to warm air by the heating heat exchanger 6 and blown to the space 31a. Then, part of the warm air passes through the space parts S1 and S2 and is blown to the defrost blowout port 10. The remaining warm air passes through the half-open communicating path 16 and is directed to the foot blowout port 12. Here, the defrost blowout port 10 is set to half-open and the amount of warm air passing through the defrost blowout port 10 is restricted.

In addition, in the lower air passage 32, all of the cool air having been cooled by the cooling heat exchanger 5 is heated by the heating heat exchanger 6, passes through the space 32a, and is blown to the foot blowout port 12. Here, since the foot blowout port 12 is set to open, the amount of warm air passing through the foot blowout port 12 is not restricted.

In the defrost foot mode in Fig. 2(d), the opening degrees of the air mix doors 7 and 8, the disposition of the vent open/close door 17, and the opening degree of the foot open/close door 15 are the same as in the foot mode in Fig. 2(c). However, the defrost foot mode in Fig. 2 (d) is different from the foot mode in Fig. 2(c) in that the opening degree of the defrost open/close door 14 is set to put the defrost blowout port 10 in the open state.

Accordingly, in the upper air passage 31, all of the cool air having been cooled by the cooling heat exchanger 5 is heated to warm air by the heating heat exchanger 6 and blown to the space 31a. Then, most of the warm air passes through the space parts S1 and S2 and is blown to the defrost blowout port 10. The remaining warm air passes through the half-open communicating path 16 and is directed to the foot blowout port 12. This is because the defrost blowout port 10 is set to an open state unlike the foot mode and the amount of air passing through the defrost blowout port 10 is not restricted. In addition, in the lower air passage 32, as in the foot mode, all of the cool air having been cooled by the cooling heat exchanger 5 is heated to warm air by the heating heat exchanger 6, passes through the space 32a, and is blown to the foot blowout port 12. Since the foot blowout port 12 is set to open also in this case, the amount of warm air passing through the foot blowout port 12 is not restricted.

Accordingly, since the ventilation resistance adjusting part 173 is positioned in a direction substantially orthogonal to the draft direction of the heating heat exchanger 6, the ventilation resistance adjusting part 173 does not become a ventilation resistance body against warm air that is heated by the heating heat exchanger 6 and directed to the defrost blowout port 10. In addition, the ventilation area of the air passage between the space 31a and the defrost blowout port 10 is not reduced by the ventilation resistance adjusting part 173.

In the defrost mode in Fig. 2(e), the opening degrees of the air mix doors 7 and 8, the opening degree of the defrost open/close door 14, and the disposition of the vent open/close door 17 are the same as in the defrost foot mode in Fig. 2(d). However, the defrost mode in Fig. 2(e) is different from the defrost foot mode in Fig. 2(d) in that the opening degree of the foot open/close door 15 is set to close the foot blowout port 12 and open the communicating path 16.

Accordingly, in the upper air passage 31, as in the defrost foot mode, after all of the cool air having been cooled by the cooling heat exchanger 5 is heated to warm air by the heating heat exchanger 6, the warm air passes through the space 31a and the space part S2 (and the space part S1) of the vent open/close door 17 is blown to the defrost blowout port 10. In the lower air passage 32, after all of the cool air having been cooled by the cooling heat exchanger 5 is heated to warm air by the heating heat exchanger 6, the warm air passes through the space 32a, the communicating path 16, and the space part S2 (and the space part S1) of the vent open/close door 17 and blown to the defrost blowout port 10.

Accordingly, since the ventilation resistance adjusting part 173 is positioned in a direction substantially orthogonal to the draft direction of the heating heat exchanger 6, the ventilation resistance adjusting part 173 does not become a ventilation resistance body against warm air that is heated by the heating heat exchanger 6 and directed to the defrost blowout port 10 and the ventilation area of the air passage between the space 31a and the defrost blowout port 10 is not reduced by the ventilation resistance adjusting part 173.

### Embodiment 2

The blowing unit 100 and the air conditioning unit 1 according to embodiment 2 are identical or similar to the blowing unit 100 and the air conditioning unit 1 according to embodiment 1 in the basic structure, but the structures of the air mix doors 7 and 8 and the disposition of the ventilation resistance adjusting part 173 with respect to the closing part 172 of the vent open/close door 17 are different from those in embodiment 1. Accordingly, components identical or similar to those in embodiment 1 are denoted by the same reference numerals as in embodiment 1 to omit or simplify descriptions thereof and the air mix doors 7 and 8 and the vent open/close door 17 will be described with reference to Fig. 3 and Fig. 4.

The air mix door 7 is a slide door and includes a door body 73 and a driving gear 74 that displace the door body 73 from the position in which the bypass path 33 is closed and the upstream side of the heating heat exchanger 6 is opened to the position in which the upstream side of the heating heat exchanger 6 is closed and the bypass path 33 is opened. In addition, the air mix door 8 is a slide door and includes a door body 83 and a driving gear 84 that displace the door body 83 from the position in which the bypass path 34 is closed and the upstream side of the heating heat exchanger 6 is opened to the position in which the upstream side of the heating heat exchanger 6 is closed and the bypass path 34 is opened.

The vent open/close door 17 is a rotary door including the rotational shaft 171, the closing part 172 that adjusts the opening degree of the vent blowout port 11, and the ventilation resistance adjusting part 173 as illustrated in Fig. 3(a) and Fig. 3(b).

The structure of the closing part 172 is the same as in embodiment 1. The structure of the ventilation resistance adjusting part 173 is also the same as in embodiment 1 except for the disposition with respect to the closing part 172. The disposition of the ventilation resistance adjusting part 173 depends on the layout of the defrost blowout port 10, the vent blowout port 11, the foot blowout port 12, and the communicating path 16 and a certain positional relationship is not present, but the following conditions are met in embodiment 2.

When the closing part 172 closes the vent blowout port 11, the ventilation resistance adjusting part 173 makes contact with the heating heat exchanger 6 (however, a slight clearance is allowed), the space parts S1 and S2 of the vent open/close door 17 ensure the ventilation area of the air passage between the space 31a and the defrost blowout port 10. When the closing part 172 has opened the vent blowout port 11 at 100% (including a substantially 100% open case), the ventilation resistance adjusting part 173 is disposed so as to position outside the air passage between the bypass path 33 and the vent blowout port 11 while being separated from the heating heat exchanger 6. When the closing part 172 half-opens the vent blowout port 11, the ventilation resistance adjusting part 173 is positioned in the air passage between the space 31a and the vent blowout port 11 and reduces the ventilation area of the air passage. Specifically, the ventilation resistance adjusting part 173 is disposed so as to make contact with the heating heat exchanger 6 (however, a slight clearance is allowed).

Next, flows of air in the vent mode, the bi-level mode, the foot mode, the defrost foot mode, and the defrost mode will be described with reference to Fig. 4.

In the vent mode in Fig. 4(a), the air mix doors 7 and 8 are set so that the door bodies 73 and 83 are positioned to cover the upstream side of the heating heat exchanger 6 and all of the air having passed through the cooling heat exchanger 5 passes through the bypass path 33 or the bypass path 34. The opening degree of the defrost open/close door 14 is set so as to close the defrost blowout port 10. The opening degree of the foot open/close door 15 is set so as to close the foot blowout port 12 and open the communicating path 16. The opening degree of the vent open/close door 17 is set so as to put the vent blowout port 11 in a 100% open state (including a substantially 100% open state). Specifically, the closing part 172 of the vent open/close door 17 is positioned between the bypass path 33 and the defrost blowout port 10 and the ventilation resistance adjusting part 173 is positioned outside the space 31a, that is, the air passage between the bypass path 33 and the vent blowout port 11.

Accordingly, in the upper air passage 31, all of the cool air having been cooled by the cooling heat exchanger 5 passes through the bypass path 33 and the space parts S1 and S2 and is blown to the vent blowout port 11. In addition, in the lower air passage 32, all of the cool air having been cooled by the cooling heat exchanger 5 passes through the bypass path 34, the communicating path 16, and the space parts S1 and S2 and is blown to the vent blowout port 11.

Accordingly, the ventilation resistance adjusting part 173 is positioned outside a flow of cool air, so the ventilation resistance adjusting part 173 does not become a ventilation resistive element against a flow of cool air from the cooling heat exchanger 5 to the vent blowout port 11.

In the bi-level mode in Fig. 4(b), the air mix doors 7 and 8 are positioned so that the door bodies 73 and 83 cover part of the upstream side of the heating heat exchanger 6 and cover parts of the upstream sides of the bypass paths 33 and 34 and the ratio of the air passing through the heating heat exchanger 6 to the air having passed through the cooling heat exchanger 5 and the ratio of the air passing through the bypass path 33 or the bypass path 34 to the air having passed through the cooling heat exchanger 5 are set to values between 0% and 100% exclusive and the sum of them equals 100%, for example, the ratio of the air passing through the heating heat exchanger 6 to the air having passed through the cooling heat exchanger 5 is, for example, 50% and the ratio of the air passing through the bypass path 33 or the bypass path 34 to the air having passed through the cooling heat exchanger 5 is, for example, 50%. The ratio (ratio at which cool air is introduced to the bypass path 33) of the opening degree of the air mix door 7 and the ratio (ratio at which cool air is introduced to the bypass path 34) of the opening degree of the air mix door 8 are the same. The opening degrees of the defrost open/close door 14 and the foot open/close door 15 are the same as those in embodiment 1. The opening degree of the vent open/close door 17 is set so as to put the vent blowout port 11 in a half-open (between 0% and 100% exclusive) state. Specifically, the closing part 172 is displaced closer to the defrost blowout port 10 than in the case in which the vent blowout port 11 is closed and the ventilation resistance adjusting part 173 is positioned so that the ventilation resistance adjusting part 173 makes contact with the heating heat exchanger 6 (however, a slight clearance is allowed) and forms a clearance through which the warm air having blown to the space 31a can pass toward the vent blowout port 11. That is, the ventilation resistance adjusting part 173 is disposed so as to reduce the ventilation area between the space 31a downstream of the heating heat exchanger 6 and the vent blowout port 11.

Accordingly, in the upper air passage 31, the cool air having passed through the cooling heat exchanger 5 becomes the cool air having passed through the bypass path 33 or the warm air having passed through the heating heat exchanger 6 and is blown to the space 31a. In the lower air passage 32, the cool air having passed through the cooling heat exchanger 5 becomes the cool air having passed through the bypass path 34 or the warm air having passed through the heating heat exchanger 6 and is blown to the space 32a.

In the upper air passage 31, all of the cool air having been cooled by the cooling heat exchanger 5 and passed through the bypass path 33 passes through the space parts S1 and S2 and is blown to the vent blowout port 11. The warm air having been heated by the heating heat exchanger 6 and blown to the space 31a tries to flow toward the vent blowout port 11, but the ventilation resistance adjusting part 173 becomes a ventilation resistive element. Therefore, part of the warm air passes through the clearance between the ventilation resistance adjusting part 173 and the casing 2 and is blown to the vent blowout port 11. The remaining warm air passes through the communicating path 16 and is blown to the foot blowout port 12.

In the lower air passage 32, all of the cool air having been cooled by the cooling heat exchanger 5 and passed through the bypass path 34 is blown to the foot blowout port 12. The warm air having been heated by the heating heat exchanger 6 and blown to the space 32a is also blown to the foot blowout port 12.

As a result, the air blown from the vent blowout port 11 is a mixture of all of the cool air having passed through the bypass path 33 and part of the warm air having been heated by the heating heat exchanger 6 and blown to the space 31a. The air blown from the foot blowout port 12 is a mixture of all of the cool air having passed through the bypass path 34, all of the warm air having been heated by the heating heat exchanger 6 and blown to the space 32a, and part of the warm air having been heated by the heating heat exchanger 6 and blown to the space 31a. Since part of the warm air having passed through the upper air passage 31 is blown from the foot blowout port 12 instead of the vent blowout port 11 as described above, by making the temperature of the air blown from the foot blowout port 12 relatively higher than the temperature of the air blown from the vent blowout port 11, a difference between the temperatures can be caused.

In the foot mode in Fig. 4(c), the air mix doors 7 and 8 are positioned so that the door bodies 73 and 83 cover the upstream side of the bypass path 33 or the bypass path 34 and the ratio of the air passing through the heating heat exchanger 6 to all of the air having passed through the cooling heat exchanger 5 is set to 100%. The opening degree of the defrost open/close door 14 is set so as to put the defrost blowout port 10 in a half-open state between 0% and 100% exclusive (for example, 20%). The opening degree of the foot open/close door 15 is set so that the closing part 162 is positioned on the upper air passage 31 side of the end part 4a downstream of the partitioning part 4 to open the foot blowout port 12 and half-open the communicating path 16. The opening degree of the vent open/close door 17 is set so as to close the vent blowout port 11. Specifically, the vent blowout port 11 is closed by the closing part 172 of the vent open/close door 17 and the ventilation resistance adjusting part 173 is positioned in a direction from the space 31a to the defrost blowout port 10.

Since the ventilation resistance adjusting part 173 is disposed along a flow of warm air from the space 31a toward the defrost blowout port 10, the ventilation resistance adjusting part 173 does not become a ventilation resistive element against warm air that is blown to the space 31a and directed to the defrost blowout port 10. The space parts S1 and S2 ensure an air passage between the space 31a and the defrost blowout port 10 and does not reduce the ventilation area.

Accordingly, in the upper air passage 31, all of the cool air having been cooled by the cooling heat exchanger 5 is heated to warm air by the heating heat exchanger 6 and blown to the space 31a. Then, part of the warm air passes through the space parts S1 and S2 and is blown to the defrost blowout port 10. The remaining warm air passes through the half-open communicating path 16 and is directed to the foot blowout port 12. Here, the defrost blowout port 10 is set to half-open and the amount of warm air passing through the defrost blowout port 10 is restricted.

In addition, in the lower air passage 32, all of the cool air having been cooled by the cooling heat exchanger 5 is heated by the heating heat exchanger 6, passes through the space 32a, and is blown to the foot blowout port 12. Since the foot blowout port 12 is set to open, the amount of warm air passing through the foot blowout port 12 is not restricted.

In the defrost foot mode in Fig. 4(d), the positions of the door bodies 73 and 83 of the air mix doors 7 and 8, the dispositions of the closing part 172 and the ventilation resistance adjusting part 173 of the vent open/close door 17, and the opening degree of the foot open/close door 15 are the same as in the foot mode in Fig. 4(c), However, the defrost foot mode in Fig. 4 (d) is different from the foot mode in Fig. 4 (c) in that the opening degree of the defrost open/close door 14 is set to put the defrost blowout port 10 in the open state.

Accordingly, in the upper air passage 31, all of the cool air having been cooled by the cooling heat exchanger 5 is heated to warm air by the heating heat exchanger 6 and blown to the space 31a. Then, most of the warm air passes through the space parts S1 and S2 and is blown to the defrost blowout port 10. The remaining warm air passes through the half-open communicating path 16 and is directed to the foot blowout port 12. This is because the defrost blowout port 10 is set to an open state unlike the foot mode and the amount of air passing through the defrost blowout port 10 is not restricted. In addition, in the lower air passage 32, as in the foot mode, all of the cool air having been cooled by the cooling heat exchanger 5 is heated to warm air by the heating heat exchanger 6, passes through the space 32a, and is blown to the foot blowout port 12. Since the foot blowout port 12 is set to open also in this case, the amount of warm air passing through the foot blowout port 12 is not restricted.

Accordingly, since the ventilation resistance adjusting part 173 is disposed along a flow of warm air from the space 31a toward the defrost blowout port 10, the ventilation resistance adjusting part 173 does not become a ventilation resistive element against warm air that is blown to the space 31a and directed to the defrost blowout port 10. In addition, the ventilation area of the air passage 3 between the space 31a and the defrost blowout port 10 is not reduced by the ventilation resistance adjusting part 173.

In the defrost mode in Fig. 4(e), the positions of the door bodies 73 and 83 of the air mix doors 7 and 8, the opening degree of the defrost open/close door 14, and the disposition of the vent open/close door 17 are the same as in the defrost foot mode in in Fig. 4(d). However, the defrost mode in Fig. 4(e) is different from the defrost foot mode in in Fig. 4(d) in that the foot open/close door 15 closes the foot blowout port 12.

Accordingly, as in the defrost foot mode, in the upper air passage 31, after all of the cool air having been cooled by the cooling heat exchanger 5 is heated to warm air by the heating heat exchanger 6, the warm air passes through the space 31a and the space part S2 of the vent open/close door 17 and is blown to the defrost blowout port 10. In the lower air passage 32, after all of the cool air having been cooled by the cooling heat exchanger 5 is heated to warm air by the heating heat exchanger 6, the warm air passes through the space 32a, the communicating path 16, and the space part S2 (and the space part S1) of the vent open/close door 17 and is blown to the defrost blowout port 10.

Accordingly, since the ventilation resistance adjusting part 173 is positioned along a flow of warm air flowing from the space 31a toward the defrost blowout port 10, the ventilation resistance adjusting part 173 does not become a ventilation resistive element against warm air from the space 31a to the defrost blowout port 10 and the ventilation area of the air passage between the space 31a and the defrost blowout port 10 is not reduced by the ventilation resistance adjusting part 173.

### Embodiment 3

The blowing unit 100 and the air conditioning unit 1 according to embodiment 3 are identical or similar to the blowing units 100 and the air conditioning units 1 according to embodiment 1 and embodiment 2 (particularly, embodiment 2) in the basic structure, but the structure of the ventilation resistance adjusting part 173 of the vent open/close door 17 of the air conditioning unit 1, a guide part 18 disposed in the upper air passage 31, and a first draft part 19 and a second draft part 20 having the guide part 18 as part of opening ends are different. Accordingly, the foot open/close door 15 has a function not included in embodiment 1 and embodiment 2. Therefore, components identical or similar to those in embodiment 1 and embodiment 2 are denoted by the same reference numerals as in embodiment 1 and embodiment 2 to omit or simplify descriptions thereof and the vent open/close door 17, the guide part 18, the first draft part 19, the second draft part 20, and the foot open/close door 15 will be described with reference to Fig. 5 and Fig. 6.

The guide part 18 forms a resistance against a flow of air separately from the ventilation resistance adjusting part 173, disposed in the space 31a in the upper air passage 31, formed in (or formed as a separate body and fixed to) the casing 2 or the like, so the position thereof is not displaced depending on the blowout mode.

The guide part 18 extends from the defrost blowout port 10 toward the foot blowout port 12, the upper end part positioned close to the defrost blowout port 10 thereof is disposed apart from the heating heat exchanger 6. In addition, the upper end part of the guide part 18 and the heating heat exchanger 6 form the first draft part 19. In addition, the lower end part of the guide part 18 positioned close to the foot blowout port 12 is disposed outside the track of the foot open/close door 15. In addition, the lower end part of the guide part 18 and the casing 2 form the second draft part 20.

As illustrated in Fig. 5(a) and Fig. 5(b), the vent open/close door 17 is a rotary door including the rotational shaft 171, the closing part 172 that adjusts the opening degree of the vent blowout port 11, and the ventilation resistance adjusting part 173.

The structure of the closing part 172 is the same as in embodiment 1 and embodiment 2. In addition, the structure of the ventilation resistance adjusting part 173 is the same as in embodiment 2. The disposition of the ventilation resistance adjusting part 173 with respect to the closing part 172 depends on the layout of the defrost blowout port 10, the vent blowout port 11, the foot blowout port 12, and the communicating path 16 and a certain positional relationship is not present, but the following conditions are met in embodiment 3.

When the closing part 172 closes the vent blowout port 11, the ventilation resistance adjusting part 173 is positioned on the defrost blowout port 10 side of the first draft part 19 and opens the first draft part 19, and the space parts S1 and S2 of the vent open/close door 17 ensure the ventilation area of the air passage between the space 31a and the defrost blowout port 10.

When the closing part 172 opens the vent blowout port 11 at 100% (including a substantially 100% open case), the ventilation resistance adjusting part 173 is positioned the foot blowout port 12 side of the first draft part 19, opens the first draft part 19, and also opens the second draft part 20. As illustrated in Fig. 6(a), the ventilation resistance adjusting part 173 is preferably disposed in a region between the guide part 18 and the vent blowout port 11. Since the ventilation resistance adjusting part 173 is hidden by the guide part 18, it is possible to suppress increase in a ventilation resistance against warm air flowing from the space 31a to the vent blowout port 11.

When the closing part 172 half-opens the vent blowout port 11, the ventilation resistance adjusting part 173 is disposed so that the outer peripheral surface thereof faces the opening of the first draft part 19 to reduce or eliminate the ventilation area of the first draft part 19.

In embodiment 3, the foot open/close door 15 can adjust the opening degree of the communicating path 16 by opening and closing the foot blowout port 12, reduce the ventilation areas of the second draft part 20 and the vent blowout port 11 by directing the end of the closing part 152 to the guide part 18, and keeping the ventilation areas of the second draft part 20 and the vent blowout port 11 without reducing the ventilation areas by directing the end of the closing part 152 to a part other than the guide part 18.

Next, flows of air in the vent mode, the bi-level mode, the foot mode, the defrost foot mode, and the defrost mode will be described with reference to Fig. 6.

In the vent mode in Fig. 6(a), the positions of the air mix doors 7 and 8 and the opening degrees of the defrost open/close door 14 and the foot open/close door 15 are set as in embodiment 2. The opening degree of the vent open/close door 17 is set in a state in which the vent blowout port 11 is open at 100% (including a substantially 100% open state) . Specifically, the closing part 172 of the vent open/close door 17 is positioned between the bypass path 33 and the defrost blowout port 10 and the ventilation resistance adjusting part 173 is positioned apart from the casing 2 outside the space 31a, that is, the air passage between the bypass path 33 and the vent blowout port 11.

Accordingly, in the upper air passage 31, all of the cool air having been cooled by the cooling heat exchanger 5 passes through the bypass path 33 and the space parts S1 and S2 and is blown to the vent blowout port 11. In addition, in the lower air passage 32, all of the cool air having been cooled by the cooling heat exchanger 5 reaches the upper air passage 31 through the bypass path 34 and the communicating path 16 and is blown to the vent blowout port 11 without being blocked by the passage resistance adjusting part 173.

Accordingly, the ventilation resistance adjusting part 173 is positioned outside a flow of cool air, so that the ventilation resistance adjusting part 173 does not become a ventilation resistive element against a flow of cool air from the cooling heat exchanger 5 to the vent blowout port 11.

In the bi-level mode in Fig. 6(b), the positions of the air mix doors 7 and 8, the opening degree of the defrost open/close door 14, and the opening degree of the foot open/close door 15 are the same as in embodiment 2. The opening degree of the vent open/close door 17 is set so as to put the vent blowout port 11 in a half-open (between 0% and 100% exclusive) state. Specifically, the closing part 172 is displaced closer to the defrost blowout port 10 than in the case in which the vent blowout port 11 is closed and the ventilation resistance adjusting part 173 is set so that the outer peripheral surface thereof faces the first draft part 19 to reduce the ventilation area of the first draft part 19 (the ventilation area may be eliminated). That is, the ventilation resistance adjusting part 173 is disposed so as to reduce the ventilation area between the space 31a downstream of the heating heat exchanger 6 and the vent blowout port 11.

Accordingly, in the upper air passage 31, the cool air having passed through the cooling heat exchanger 5 becomes the cool air having passed through the bypass path 33 or the warm air having passed through the heating heat exchanger 6 and is blown to the space 31a. In the lower air passage 32, the cool air having passed through the cooling heat exchanger 5 becomes the cool air having passed through the bypass path 34 or the warm air having passed through the heating heat exchanger 6 and is blown to the space 32a.

In the upper air passage 31, all of the cool air having been cooled by the cooling heat exchanger 5 and passed through the bypass path 33 passes through the space parts S1 and S2 and is blown to the vent blowout port 11. The warm air having been heated by the heating heat exchanger 6 and blown to the space 31a tries to flow toward the vent blowout port 11, but the guide part 18 and the ventilation resistance adjusting part 173 become ventilation resistive elements. Therefore, part of the warm air passes through the clearance between the guide part 18 and the casing 2 and is blown to the vent blowout port 11. The remaining warm air passes through the communicating path 16 and is blown to the foot blowout port 12.

In the lower air passage 32, all of the cool air having been cooled by the cooling heat exchanger 5 and passed through the bypass path 34 is blown to the foot blowout port 12. The warm air having been heated by the heating heat exchanger 6 and blown to the space 32a is also blown to the foot blowout port 12.

As a result, the air blown from the vent blowout port 11 is a mixture of all of the cool air having passed through the bypass path 33 and part of the warm air having been heated by the heating heat exchanger 6 and blown to the space 31a. The air blown from the foot blowout port 12 is a mixture of all of the cool air having passed through the bypass path 34, all of the warm air having been heated by the heating heat exchanger 6 and blown to the space 32a, and part of the warm air having heated by the heating heat exchanger 6 and blown to the space 31a. Since part of the warm air having passed through the upper air passage 31 is blown from the foot blowout port 12 instead of the vent blowout port 11 as described above, by making the temperature of the air blown from the foot blowout port 12 relatively higher than the temperature of the air blown from the vent blowout port 11, a difference between the temperatures can be caused.

In the foot mode in Fig. 6(c), the opening degrees of the air mix doors 7 and 8, the defrost open/close door 14, and the foot open/close door 15 are set as in embodiment 2. The opening degree of the vent open/close door 17 is set so as to close the vent blowout port 11. Specifically, the vent blowout port 11 is closed by the closing part 172 of the vent open/close door 17 and the ventilation resistance adjusting part 173 is positioned along a direction from the space 31a to the defrost blowout port 10.

Since the ventilation resistance adjusting part 173 is disposed along a flow of warm air from the space 31a toward the defrost blowout port 10, the ventilation resistance adjusting part 173 does not become a ventilation resistive element against warm air that is blown to the space 31a and directed to the defrost blowout port 10. The space parts S1 and S2 ensure the air passage between the space 31a and the defrost blowout port 10 and does not reduce the ventilation area.

Accordingly, in the upper air passage 31, all of the cool air having been cooled by the cooling heat exchanger 5 is heated to warm air by the heating heat exchanger 6 and blown to the space 31a. Then, part of the warm air passes through the space parts S1 and S2 and is blown to the defrost blowout port 10. The remaining warm air passes through the half-open communicating path 16 and is directed to the foot blowout port 12. Here, the defrost blowout port 10 is set to half-open and the amount of warm air passing through the defrost blowout port 10 is restricted.

In addition, in the lower air passage 32, all of the cool air having been cooled by the cooling heat exchanger 5 is heated by the heating heat exchanger 6, passes through the space 32a, and is blown to the foot blowout port 12. Since the foot blowout port 12 is set to open, the amount of warm air passing through the foot blowout port 12 is not restricted.

In the defrost foot mode in Fig. 6(d), the positions of the door bodies 73 and 83 of the air mix doors 7 and 8, the dispositions of the closing part 172 and the ventilation resistance adjusting part 173 of the vent open/close door 17, and the opening degree of the foot open/close door 15 are the same as in the foot mode in Fig. 6(c). However, the defrost foot mode in Fig. 6 (d) is different from the foot mode in Fig. 6 (c) in that the opening degree of the defrost open/close door 14 is set to put the defrost blowout port 10 in the open state.

Accordingly, in the upper air passage 31, all of the cool air having been cooled by the cooling heat exchanger 5 is heated to warm air by the heating heat exchanger 6 and blown to the space 31a. Then, most of the warm air passes through the space part S2 (and S1) and is blown to the defrost blowout port 10. The remaining warm air passes through the half-open communicating path 16 and is directed to the foot blowout port 12. This is because the defrost blowout port 10 is set to an open state unlike the foot mode and the amount of air passing through the defrost blowout port 10 is not restricted. In addition, in the lower air passage 32, as in the foot mode, all of the cool air having been cooled by the cooling heat exchanger 5 is heated to warm air by the heating heat exchanger 6, passes through the space 32a, and is blown to the foot blowout port 12. Since the foot blowout port 12 is set to open also in this case, the amount of warm air passing through the foot blowout port 12 is not restricted.

Accordingly, since the ventilation resistance adjusting part 173 is disposed along a flow of warm air from the space 31a toward the defrost blowout port 10, the ventilation resistance adjusting part 173 does not become a ventilation resistive element against warm air that is blown to the space 31a and directed to the defrost blowout port 10. In addition, the ventilation area of the air passage between the space 31a and the defrost blowout port 10 is not reduced by the ventilation resistance adjusting part 173.

In the defrost mode in Fig. 6(e), the positions of the door bodies 73 and 83 of the air mix doors 7 and 8, the opening degree of the defrost open/close door 14, and the disposition of the vent open/close door 17 are the same as in the defrost foot mode in Fig. 6(d). However, the defrost mode in Fig. 6 (e) is different from the defrost foot mode in Fig. 6(d) in that the opening degree of the foot open/close door 15 closes the foot blowout port 12.

Accordingly, as in the defrost foot mode, in the upper air passage 31, after all of the cool air having been cooled by the cooling heat exchanger 5 is heated to warm air by the heating heat exchanger 6, the warm air passes through the space 31a and the space part S2 of the vent open/close door 17 and is blown to the defrost blowout port 10. In the lower air passage 32, after all of the cool air having been cooled by the cooling heat exchanger 5 is heated to warm air by the heating heat exchanger 6, the warm air passes through the space 32a, the communicating path 16, the space part S2 (and the space part S1) of the vent open/close door 17 and is blown to the defrost blowout port 10.

Accordingly, since the ventilation resistance adjusting part 173 is positioned along a flow of warm air flowing from the space 31a toward the defrost blowout port 10, the ventilation resistance adjusting part 173 does not become a ventilation resistive element against warm air from the space 31a to the defrost blowout port 10 and the ventilation area of the air passage between the space 31a and the defrost blowout port 10 is not reduced by the ventilation resistance adjusting part 173.

### Embodiment 4

The blowing unit 100 and the air conditioning unit 1 according to embodiment 4 are identical or similar to the blowing units 100 and the air conditioning units 1 according to embodiments 1 to 3 (particularly, embodiment 2) in the basic structure, but the structure of the closing part 172 of the vent open/close door 17 of the air conditioning unit 1 is different from that of the air conditioning unit 1 according to embodiment 2. Therefore, components identical or similar to those in embodiments 1 to 3 are denoted by the same reference numerals as in embodiments 1 to 3 to omit or simplify descriptions thereof and the vent open/close door 17 will be described with reference to Fig. 7 and Fig. 8.

The vent open/close door 17 includes the rotational shaft 171, the closing part 172 that adjusts the opening degree of the vent blowout port 11, and the ventilation resistance adjusting part 173 that forms a resistance against a flow of air as illustrated in Fig. 7 (a) and Fig. 7(b) and the closing part 172 is a butterfly door having two planar parts 172a and 172b extending in two directions from the rotational shaft 171. The planar part 172a is positioned the defrost blowout port 10 side of the planar part 172b. The closing part 172 of the vent open/close door 17 can put the vent blowout port 11 in a closed state, a half-open state between 0% and 100% exclusive, or a 100% open state. In the closing part 172, in embodiment 4, the shape formed by the end of the planar part 172a, the rotational shaft 171, and the end of the planar part 172b has a V-shape having an interior angle between 90 degrees and 180 degrees exclusive.

When the closing part 172 closes the vent blowout port 11, both the planar parts 172a and 172b make contact with the inner surface of the vent blowout port 11. When the closing part 172 half-opens the vent blowout port 11, the planar part 172b positions above the planar part 172a and the planar parts 172a and 172b are slightly away from the inner surface of the vent blowout port 11. When the closing part 172 opens the vent blowout port 11 at 100% (including a substantially 100% open case), the planar part 172b positions further above the planar part 172a than in a case in which the vent blowout port 11 half-opens and the planar parts 172a and 172b disposed substantially along an axial direction of the vent blowout port 11.

Next, flows of air in the vent mode, the bi-level mode, the foot mode, the defrost foot mode, and the defrost mode will be described with reference to Fig. 8.

In the vent mode in Fig. 8(a), the opening degrees of the air mix doors 7 and 8, the defrost open/close door 14, and the foot open/close door 15 are set as in embodiment 2 and embodiment 3. The opening degree of the vent open/close door 17 is set so as to put the vent blowout port 11 in a 100% open state (including a substantially 100% open state). Specifically, the planar parts 172a and 172b are positioned at an angle substantially along the axial direction of the vent blowout port 11 and the ventilation resistance adjusting part 173 is positioned apart from the casing 2 outside the space 31a, that is, the air passage between the bypass path 33 and the vent blowout port 11.

Accordingly, in the upper air passage 31, all of the cool air having been cooled by the cooling heat exchanger 5 passes through the bypass path 33 and the space part S2 and is blown to the vent blowout port 11. In addition, in the lower air passage 32, all of the cool air having been cooled by the cooling heat exchanger 5 reaches the upper air passage 31 through the bypass path 34 and the communicating path 16 and is directed to the vent blowout port 11 along the surface of the planar part 172 without being blocked by the passage resistance adjusting part 173.

Accordingly, the ventilation resistance adjusting part 173 is positioned outside a flow of cool air, so that the ventilation resistance adjusting part 173 does not become a ventilation resistive element against a flow of cool air from the cooling heat exchanger 5 to the vent blowout port 11.

In the bi-level mode in Fig. 8(b), the positions of the air mix doors 7 and 8, the opening degree of the defrost open/close door 14, and the opening degree of the foot open/close door 15 are the same as in embodiment 2. The opening degree of the vent open/close door 17 is set so as to put the vent blowout port 11 in a half-open state (between 0% and 100% exclusive). Specifically, the closing part 172 is put in the half-open state, the ventilation resistance adjusting part 173 is positioned so that the ventilation resistance adjusting part 173 makes contact with the heating heat exchanger 6 (however, a slight clearance is allowed) and forms a clearance through which the warm air having blown to the space 31a can pass toward the vent blowout port 11. That is, the ventilation resistance adjusting part 173 is disposed so as to reduce the ventilation area between the space 31a downstream of the heating heat exchanger 6 and the vent blowout port 11.

Accordingly, in the upper air passage 31, the cool air having passed through the cooling heat exchanger 5 becomes the cool air having passed through the bypass path 33 or the warm air having passed through the heating heat exchanger 6 and is blown to the space 31a. In the lower air passage 32, the cool air having passed through the cooling heat exchanger 5 becomes the cool air having passed through the bypass path 34 or the warm air having passed through the heating heat exchanger 6 and is blown to the space 32a.

In the upper air passage 31, all of the cool air having been cooled by the cooling heat exchanger 5 and passed through the bypass path 33 passes through the space parts S1 and S2 and is blown to the vent blowout port 11. The warm air having been heated by the heating heat exchanger 6 and blown to the space 31a tries to flow toward the vent blowout port 11, but the ventilation resistance adjusting part 173 becomes a ventilation resistive element. Therefore, part of the warm air passes through the clearance between the ventilation resistance adjusting part 173 and the casing 2 and is blown to the vent blowout port 11. The remaining warm air passes through the communicating path 16 and is blown to the foot blowout port 12.

In the lower air passage 32, all of the cool air having been cooled by the cooling heat exchanger 5 and passed through the bypass path 34 is blown to the foot blowout port 12. The warm air having been heated by the heating heat exchanger 6 and blown to the space 32a is also blown to the foot blowout port 12.

As a result, the air blown from the vent blowout port 11 is a mixture of all of the cool air having passed through the bypass path 33 and part of the warm air having been heated by the heating heat exchanger 6 and blown to the space 31a. The air blown from the foot blowout port 12 is a mixture of all of the cool air having passed through the bypass path 34, all of the warm air having been heated by the heating heat exchanger 6 and blown to the space 32a, and part of the warm air having been heated by the heating heat exchanger 6 and blown to the space 31a. Since part of the warm air having passed through the upper air passage 31 is blown from the foot blowout port 12 instead of the vent blowout port 11 as described above, by making the temperature of the air blown from the foot blowout port 12 relatively higher than the temperature of the air blown from the vent blowout port 11, a difference between the temperatures can be caused.

In the foot mode in Fig. 8(c), the positions of the air mix doors 7 and 8 and the opening degrees of the defrost open/close door 14 and the foot open/close door 15 are set as in embodiment 2 and embodiment 3. The opening degree of the vent open/close door 17 is set so as to close the vent blowout port 11. Specifically, the vent blowout port 11 is closed by the closing part 172 of the vent open/close door 17 and the ventilation resistance adjusting part 173 is positioned along a direction from the space 31a to the defrost blowout port 10.

Since the ventilation resistance adjusting part 173 is disposed along a flow of warm air from the space 31a toward the defrost blowout port 10, the ventilation resistance adjusting part 173 does not become a ventilation resistive element against warm air that is blown to the space 31a and directed to the defrost blowout port 10. The space part S2 ensures the air passage between the space 31a and the defrost blowout port 10 and does not reduce the ventilation area.

Accordingly, in the upper air passage 31, all of the cool air having been cooled by the cooling heat exchanger 5 is heated to warm air by the heating heat exchanger 6 and blown to the space 31a. Then, part of the warm air passes through the space parts S1 and S2 and is blown to the defrost blowout port 10. The remaining warm air passes through the half-open communicating path 16 and is directed to the foot blowout port 12. Here, the defrost blowout port 10 is set to half-open and the amount of warm air passing through the defrost blowout port 10 is restricted.

In addition, in the lower air passage 32, all of the cool air having been cooled by the cooling heat exchanger 5 is heated by the heating heat exchanger 6, passes through the space 32a, and is blown to the foot blowout port 12. Since the foot blowout port 12 is set to open, the amount of warm air passing through the foot blowout port 12 is not restricted.

In the defrost foot mode in Fig. 8(d), the positions of the door bodies 73 and 83 of the air mix doors 7 and 8, the dispositions of the closing part 172 and the ventilation resistance adjusting part 173 of the vent open/close door 17, and the opening degree of the foot open/close door 15 are the same as in the foot mode in Fig. 8(c). However, the defrost foot mode in Fig. 8 (d) is different from the foot mode in Fig. 8 (c) in that the opening degree of the defrost open/close door 14 is set to put the defrost blowout port 10 in the open state.

Accordingly, in the upper air passage 31, all of the cool air having been cooled by the cooling heat exchanger 5 is heated to warm air by the heating heat exchanger 6 and blown to the space 31a. Then, most of the warm air passes through the space part S2 and is blown to the defrost blowout port 10. The remaining warm air passes through the half-open communicating path 16 and is directed to the foot blowout port 12. This is because the defrost blowout port 10 is set to an open state unlike the foot mode and the amount of air passing through the defrost blowout port 10 is not restricted. In addition, in the lower air passage 32, as in the foot mode, all of the cool air having been cooled by the cooling heat exchanger 5 is heated to warm air by the heating heat exchanger 6, passes through the space 32a, and is blown to the foot blowout port 12. Since the foot blowout port 12 is set to open also in this case, the amount of warm air passing through the foot blowout port 12 is not restricted.

Accordingly, since the ventilation resistance adjusting part 173 is disposed along a flow of warm air from the space 31a toward the defrost blowout port 10, the ventilation resistance adjusting part 173 does not become a ventilation resistive element against warm air that is blown to the space 31a and directed to the defrost blowout port 10. In addition, the ventilation area of the air passage between the space 31a and the defrost blowout port 10 is not reduced by the ventilation resistance adjusting part 173.

In the defrost mode in Fig. 8(e), the positions of the door bodies 73 and 83 of the air mix doors 7 and 8, the opening degree of the defrost open/close door 14, and the disposition of the vent open/close door 17 are the same as in the defrost foot mode in Fig. 8(d). However, the defrost mode in Fig. 8 (e) is different from the defrost foot mode in Fig. 8(d) in that the opening degree of the foot open/close door 15 is set to close the foot blowout port 12 and open the communicating path 16.

Accordingly, as in the defrost foot mode, in the upper air passage 31, after all of the cool air having been cooled by the cooling heat exchanger 5 is heated to warm air by the heating heat exchanger 6, the warm air passes through the space 31a and the space part S2 of the vent open/close door 17 and is blown to the defrost blowout port 10. In the lower air passage 32, after all of the cool air having been cooled by the cooling heat exchanger 5 is heated to warm air by the heating heat exchanger 6, the warm air passes through the space 32a, the communicating path 16, and the space part S2 of the vent open/close door 17 and is blown to the defrost blowout port 10.

Accordingly, since the ventilation resistance adjusting part 173 is positioned along a flow of warm air flowing from the space 31a toward the defrost blowout port 10, the ventilation resistance adjusting part 173 does not become a ventilation resistive element against warm air from the space 31a to the defrost blowout port 10 and the ventilation area of the air passage between the space 31a and the defrost blowout port 10 is not reduced by the ventilation resistance adjusting part 173.

### Reference Signs List

1: air conditioning unit
2: casing
3: air passage
31: upper air passage
31a: space (space downstream of heating heat exchanger in upper air passage)
32: lower air passage
32a: space (space downstream of heating heat exchanger in lower air passage)
33: bypass path
34: bypass path
4: partitioning part
5: cooling heat exchanger
6: heating heat exchanger
7: air mix door
8: air mix door
10: defrost blowout port
11: vent blowout port
12: foot blowout port
14: defrost open/close door
142: closing part
15: foot open/close door
152: closing part
16: communicating path
17: vent open/close door
171: rotational shaft
172: closing part
173: ventilation resistance adjusting part
18: guide part
19: first draft part
20: second draft part
S1: space part
S2: space part

## Claims

1. A vehicle air conditioning unit (1) comprising:
a casing (2) having an air passage (3) therein;
a defrost blowout port (10), a vent blowout port (11), and a foot blowout port (12) formed in the casing (2);
a defrost open/close door (14) that opens and closes the defrost blowout port (10) using a closing part (142), a vent open/close door (17) that opens and closes the vent blowout port (11) using a closing part (172), and a foot open/close door (15) that opens and closes the foot blowout port (12) using a closing part (152);
an upper air passage (31) and a lower air passage (32) formed one above another by partitioning the air passage (3) using a partitioning part (4);
a cooling heat exchanger (5) disposed in the upper air passage (31) and the lower air passage (32); and
a heating heat exchanger (6) disposed downstream of the cooling heat exchanger (5) in the upper air passage (31) and the lower air passage (32),
the defrost blowout port (10) and the vent blowout port (11) being opened above the partitioning part (4), the foot blowout port (12) being opened below the defrost blowout port (10) and the vent blowout port (11),
wherein the vent open/close door (17) has a ventilation resistance adjusting part (173) that forms a resistance against a flow of air separately from the closing part (172) and
the ventilation resistance adjusting part (173) is disposed in a position in which a ventilation area of an air passage between a space (31a) downstream of the heating heat exchanger (6) in the upper air passage (31) and the vent blowout port (11) is smaller in a bi-level mode than in other blowout modes, and the ventilation resistance adjusting part (173) is disposed in a position in which a ventilation area of an air passage between the space (31a) downstream of the heating heat exchanger (6) in the upper air passage (31) and the defrost blowout port (10) is not smaller in a defrost mode than in other blowout modes.

2. The vehicle air conditioning unit (1) according to claim 1,
wherein the ventilation resistance adjusting part (173) is positioned in a direction substantially orthogonally to a draft direction of the heating heat exchanger (6) in the defrost mode.

3. The vehicle air conditioning unit (1) according to claim 1,
wherein the ventilation resistance adjusting part (173) is positioned along a flow of air from the space (31a) downstream of the heating heat exchanger (6) in the upper air passage (31) toward the defrost blowout port (10) in the defrost mode.

4. The vehicle air conditioning unit (1) according to claim 1 or 3,
wherein the ventilation resistance adjusting part (173) is disposed in a position in which the ventilation resistance adjusting part (173) makes the ventilation area of the air passage between the space (31a) downstream of the heating heat exchanger (6) in the upper air passage (31) and the vent blowout port (11) smaller in the bi-level mode than in other blowout modes by making contact with the heating heat exchanger (6) .

5. The vehicle air conditioning unit (1) according to any one of claims 1, 3, and 4,
wherein the upper air passage (31) is provided with a guide part (18) that forms a resistance against a flow of air downstream of the heating heat exchanger (6) in the upper air flow path (31),
the guide part (18) extends from the defrost blowout port (10) toward the foot blowout port (12),
an upper end part of the guide part (18) positioned close to the defrost blowout port (10) is disposed apart from the heating heat exchanger (6) and a first draft part (19) is formed between the upper end part and the heating heat exchanger (6),
the first draft part (19) is closed by the ventilation resistance adjusting part (173) or a ventilation area of the first draft part (19) is smaller in the bi-level mode than in other blowout modes, and
a lower end part of the guide part (18) positioned close to the foot blowout port (12) is disposed outside a track of the foot open/close door (15) and a second draft part (20) is formed between the lower end part and the casing (2).

6. The vehicle air conditioning unit (1) according to any one of claims 1 to 5, further comprising:
a first air mix door (7) that is disposed between the cooling heat exchanger (5) and the heating heat exchanger (6) in the upper air passage (31) and adjusts a ratio of air passing through the heating heat exchanger (6) to air having passed through the cooling heat exchanger (5) and a ratio of air passing through a bypass path (33) positioned above the heating heat exchanger (6) to the air having passed through the cooling heat exchanger (5);
a second air mix door (8) that disposed between the cooling heat exchanger (5) and the heating heat exchanger (6) in the lower air passage (32) and adjusts a ratio of air passing through the heating heat exchanger (6) to the air having passed through the cooling heat exchanger (5) and a ratio of air passing through a bypass path (34) positioned below the heating heat exchanger (6) to the air having passed through the cooling heat exchanger(5); and
a communicating path (16) through which the upper air passage (31) communicates with the lower air passage (32) downstream of the heating heat exchanger (6),
wherein an opening degree of the communicating path (16) is adjusted by the foot open/close door (15).

7. The vehicle air conditioning unit (1) according to any one of claims 1 to 6,
wherein the vent open/close door (17) has a rotational shaft (171) about which the closing part (172) and the ventilation resistance adjusting part (173) pivot and
a space part (S2) through which air is passable is formed between the ventilation resistance adjusting part (173) and the rotational shaft (171).
